# EUROPEAN PATENT SPECIFICATION

(11) **EP 2 871 058 B1**
(45) Date of publication and mention of the grant of the patent: **15.06.2016**
(21) Application number: 14191944.9
(22) Date of filing: 05.11.2014
(51) Int. Cl.: B41J 29/02, B41J 2/435, B08B 15/00, B23Q 7/14, B41J 3/54, B41J 13/12, G06K 17/00, B41J 29/17, G06K 13/00

(54) **Modular system for printing documents**
Modulares System zum Drucken von Dokumenten
Système modulaire permettant d'imprimer des documents

(30) Priority: 08.11.2013 IT MI20131853
(43) Date of publication of application: 13.05.2015
(73) Proprietor: Cucchi, Maurizio, 21038 Leggiuno (VA) (IT)
(72) Inventor: Cucchi, Maurizio, 21038 Leggiuno (VA) (IT)
(74) Representative: Gatti, Enrico

(56) References cited:
- DE-A1- 10 013 624
- JP-A- H06 315 513
- US-A- 6 082 617
- US-A1- 2005 099 438

## Description

The present invention related to a modular system for printing documents.

More specifically, the invention relates to a system for customizing cards, plastic ones for example, by using direct laser printing technology to produce secure identification documents, driving licences and possibly other types of plastic badge with/without IC, also for financial uses such as credit cards, discount cards, and cards for public and social services, also pertaining to public health.

Traditionally, the above sector has been served by so-called "centralized" machines, which are sized for both the variability of the functions required and the hourly production requirements to meet mass production needs.

The layout of these machines is designed according to the required productivity (cards/hour) and the physiological time that each single basic operation requires; normally, the longest time that is needed for a basic operation is that which then conditions the sizing of the centralized machine. For example, if the encoding operation requires 20 seconds and the centralized machine is sized to produce a card every 4 seconds, there is a resultant need to install 5 encoding units in the station that work in parallel on 5 cards simultaneously.

Every station of a centralized machine that performs each of the above-mentioned basic functions is composed of a variable number of individual operating sub-stations based on considerations as exemplified above.

The overall reliability of such as system is highly penalised, as it is the product of the reliability of the individual operating stations in series. Centralized machines are always very large and expensive to maintain, with buffer stations between one station and another to balance the flow.

In other implementations, the same operating functions of the centralized machines are condensed inside a small machine, which normally has the size of an office photocopier, and are strictly singularized, i.e. only one sub-station that performs a single function is installed inside a desktop machine. Therefore, there is just one encoder, or just one laser, etc. With such a minimized architecture, the desktop machine will have the hourly productivity that is permitted by the longest single operation; the evident advantage consists in the reduced size/weight, and the ease and standardization of maintenance and service operations in the event of malfunction.

The desktop machine internally combines all the basic functions for enabling its autonomous operation, such as the cooling of the laser source and the electric power supply units, the supply of direct current (AC/DC), and the extraction and filtering of gases deriving from the interaction of the laser with the plastic cards.

There is great debate about and competition between centralized and decentralized solutions on the laser printing of identification documents, especially in those countries where security is a problem. In the centralized solution, there is a sole centre where identification documents are printed. In the decentralized solution, there are a number of public authorities that can locally print and hence issue identification documents. For example, each city or municipality is provided with desktop printing systems for identification documents, for example, at prefectures or police stations.

In some countries, especially developing countries, the printing operators spread across the nation do not have the complete trust of the authorities. In fact, it is found that desktop machines for printing identification documents can actually produce perfectly original documents, but with false identities.

To solve the problem of false identities, it has been attempted to provide each desktop document printer with biometric procedures that enable illegal actions to be avoided in the production of secure documents. However, these modifications increase the costs and complexity of operations, yet without completely solving the problem. Therefore, centralized solutions prove to be the only viable solution, although they are very expensive and, as already mentioned, tend to have breakdowns more frequently, which cause production line stoppage or a significant drop in the planned production flow.

The object of the present invention is to provide a centralized printing system of innovative design that overcomes the technical drawbacks of the known art.

A further object of the present invention is to provide a less expensive and more reliable centralized printing system with respect to those currently known.

These and other objects are achieved by a centralized printing system in accordance with the technical teachings of the appended claims.

According to the present invention, a number of desktop identification document printers are provided, all placed in a single location and the operation of which is managed by centralized software. The security will be identical to that of centralized units, or even increased with the aid of possible biometric checking and all of the security characteristics present in the place where the printers are installed. Furthermore, a supervisor is contemplated for controlling the actions of the operator precisely where the printers are placed.

Further characteristics and advantages of the invention will become evident from the description of a preferred, but not exclusive, embodiment of the invention, shown by way of example and therefore not limited to the accompanying drawings, in which:
Figure 1 is a schematic plan view of a system according to the present invention;
Figure 2 is a simplified perspective view of a single modular machine forming part of the system in Figure 1, in an installation phase of a bedplate specially prepared to receive it; and
Figure 3 is a simplified perspective view of the printing unit in Figure 2, without a protective casing in order to reveal the functional modules.

With reference to the above-mentioned Figures, a modular system for printing identification documents, indicated as a whole by reference numeral 100, is shown.

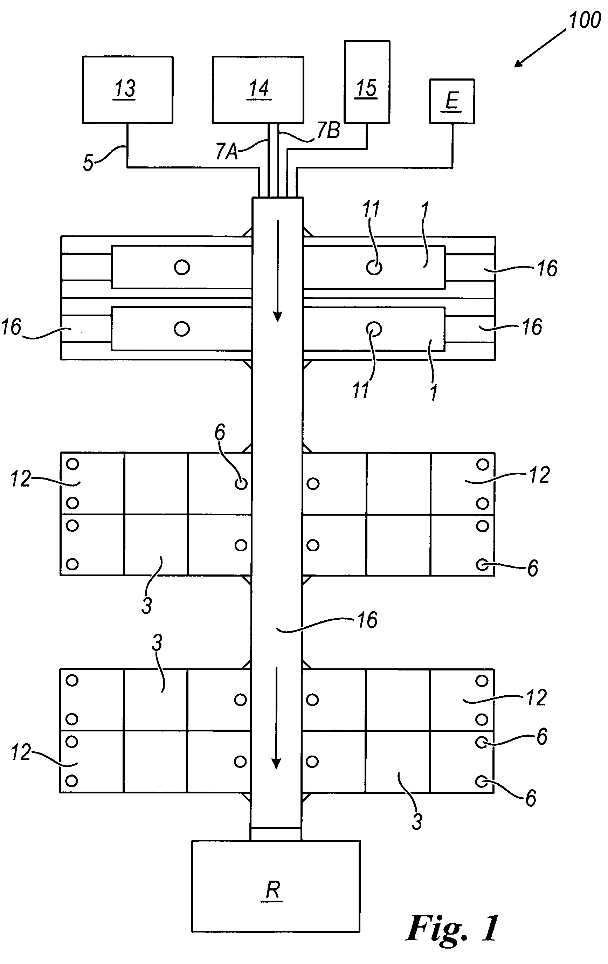

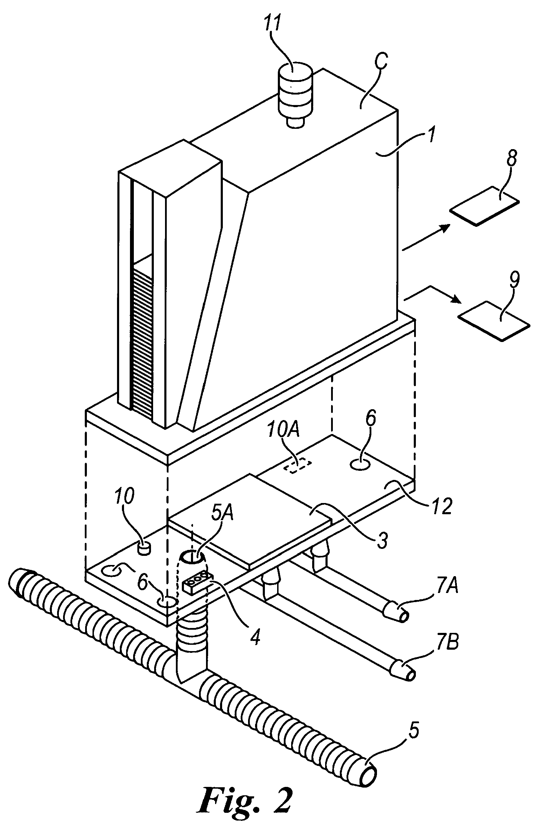

The system 100 provides a plurality of modular machines 1 similar to desktop units, placed in parallel and with each one positioned on a bedplate 12, clearly visible in Figure 2. In Figure 1, the system shows some modular machines 1 properly installed on the respective bedplates 12, and also shows some empty bedplates 12, without modular machines but ready to receive them.

The number of bedplates 12, and consequently the number of desktop machines, is designed to ensure throughput characteristics (cards/hour) entirely similar to a conventional centralized system, but, as already specified, this result is achieved by putting N modular machines 1 in parallel.

The N modular machines are each mechanically connected to a bedplate 12 and discharge their product (namely, the card or document ready for use) onto a single collector 16 (for example, a conveyor belt), which transfers them to a single collection point R.

Essentially, the individual modular machine receives 'general' services for its operation via the bedplate.

In the specific example, each bedplate 12 has a cooling plate 3, which offers the modular machine 1 a cooling service for the laser source. The plate is cooled by a fluid that is fed from a feed pipe 7A, runs through opportune channelling in the plate and flows out to a recirculation line 7B.

The fluid is kept at an optimal temperature by a centralized cooling system 14 that serves all the bedplates 12.

Alternatively, the cooling service could be provided by other opportune means of cooling such as, for example, an inlet that feeds a flow of cold air into the individual modular machine 1, or known circulation piping for a coolant fluid directly inside the machine or some other similar technique, etc.

In addition, there is a connector 4 that provides electric power. The connector supplies direct current to the machine and is fed from an opportune power supply E, common to all the machines.

There is also a suction nozzle 5A connected to a duct 5 that sucks the fumes given off by the interaction of the laser with the plastic cards and conveys them to a filtering service for noxious residues 13, which is also centralized.

Each bedplate obviously has centring guides 6 for the easy and rapid positioning and locking of each machine 1.

The bedplate also has an data interface system 10, for example, with electrical connectors or a wireless type, for the functional connection of every single machine to a PC server 15, which performs the function of managing the operational state of the entire system by controlling every single machine; this connection can also be implemented via a male/female plug/socket external to the bedplate 12, or in some other known manner.

This PC server also performs the function of routing computer files, containing variable data to be printed by laser, to the first machine that is operationally available and hence ready to receive said files.

Essentially, the PC server manages the various modular machines 1, optimizing their operation and notifying an operator of any errors on them, so as to guide repairs.

Advantageously, if a modular machine 1 actually ceases to function, the PC Server will handle this by excluding it from file distribution and signalling its malfunction to the system "dashboard", so that steps can be taken to replace it with a backup machine. The rest of the modular machines will instead continue working as if nothing had happened.

This does not happen with centralized machines. In fact, in these machines, a problem encountered in a part of the machine results in the immediate arrest of the entire machine, taking productivity down to zero until the problem is solved.

The bedplate could also be provided with its own reader 10A for the code of a machine, for example an RFID unit, which enables the PC server to unambiguously identify the machine in question. Other known unambiguous identification methods for identifying the machine can be used, such as, for example, a serial number to be entered on the control unit, a bar code or other means.

Each individual modular machine according to the present invention is provided with a protective casing C on top of which an indicator light 11 is installed that indicates the operating state.

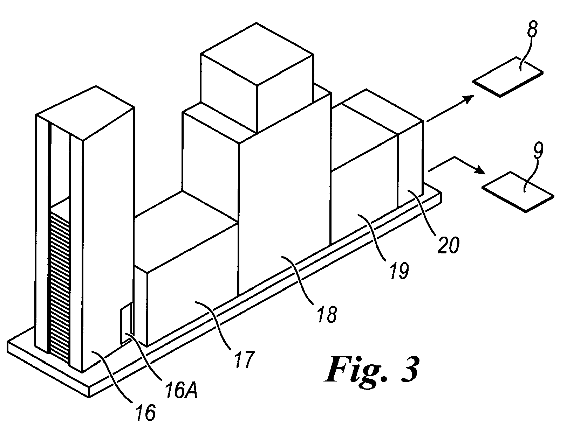

Underneath the casing C (see Figure 3) there is a buffer magazine 16 of 'virgin' cards, preferably stacked one on top of the other, in which a single-card picker module 16A (separator) is installed, which feeds a card to an encoding module 17 for reading/writing a chip or magnetic strip on the card.

Downstream of the encoding module 17 there is a laser module 18 that writes the variable data on the card. This module also handles the printing of the holder's photograph and other necessary information, as well as security requirements, such as the printing of images and wording of the MLI and/or CLI types (subject of specific patents).

A turnover module 19 turns the card over and passes it back to the laser module 18, thereby enabling data to be written on the other face of the card as well.

The control module 20, instead, controls the printed data (via OCR for example) and ejects 8 the card over the single collector 16, if it is in conformance with the request specifications, or discards 9 it from the cycle if it does not comply.

The overall reliability of the system forming the subject of the invention is represented by the reliability of each single modular machine 1 and is therefore numerically much higher than the situation regarding the centralized machines analysed above; maintenance and service are greatly facilitated in cases of malfunction and are reduced to replacing the defective modular machine with another backup one, advantageously provided with the system, while the rest of the system continues to operate.

Obviously, the number of modular machines 1 planned for the system, and consequently the number of bedplates 12, is variable depending upon requirements.

For example, ten modular machines have productivity ranging from 600 to 2000 ID cards per hour; this production level is comparable if not greater to that of known centralized units that comprise, for example, five laser printers. Nevertheless, the solution of the present invention has a cost of half that of conventional centralized systems.

As already described, the modular machines 1 are all connected to a computer unit 15 provided with software that manages them so as to behave, on the whole, like a centralized unit.

Advantageously, as can be seen, the various modular machines 1 are all the same, and are preferably organized in two rows. The cards are output onto a common conveyor belt 16 that advantageously feeds the cards produced to a conventional unit R, which glues each card onto a corresponding covering letter and puts them into envelopes.

A preferred embodiment of the invention has been described, but others could be conceived by exploiting the same inventive concept.

## Claims

1. A modular system for printing identification documents comprising a plurality of modular machines (1) placed in parallel, each one fitted with at least one storage magazine (16) for a plurality of virgin cards, means (18) for laser printing variable data on a card, and means of ejecting a printed card onto a collector (16) common to said plurality of modular machines (1), the system further comprising a central computer (15) interfaced with each modular machine (1) and adapted to manage and coordinate their operation; wherein general means of centralized services are provided for each modular machine (1); and wherein a plurality of bedplates (12) are provided upon which these modular machines (1) are positioned, each of said respective bedplates (12) comprising locking/unlocking means for said respective modular machines and connection elements (10) adapted to functionally connect each machine (1) to said centralized services.

2. A system according the preceding claim, wherein said means of centralized services comprise an electric power supply service for each modular machine (1) and/or a cooling system service (14) for each modular machine (1) and/or a fume suction/filtering system service (5) for each modular machine (1).

3. A system according to claim 2; wherein said connection elements comprise a cooling plate (3) for functionally connecting said machine (1) to said cooling service (14) and/or a nozzle (5A) for connecting said machine (1) to said fume suction service (5) and/or an electrical connector (4) for connecting said machine (1) to said power supply service in direct current.

4. A system according to one or more of the preceding claims, wherein said bedplate (12) comprises means (10) for interfacing a modular machine (1) positioned on it with said central computer (15).

5. A system according to one or more of the preceding claims, wherein said collector (16) feeds the finished cards to an automated letter/envelope preparation system (R) for sending the documents.

6. A system according to one or more of the preceding claims, wherein each of said machines (1) comprises a picker module (16A) for taking a single card from the magazine (16) and/or an encoding module (17) for reading/writing a chip or a magnetic strip on the card and/or a turnover module (19) that turns the card over and passes it back to the laser module (18), and/or a control module (20) that provides for checking the printed data and the routing of the card to the single collector (16) or its expulsion from the system.

7. A system according to one or more of the preceding claims, wherein said common collector (16) is a conveyor belt that is controlled by said control unit (15).

## Patentansprüche

1. Modulares System zum Drucken von Identitätsdokumenten mit einer Mehrzahl von parallel angeordneten, modularen Maschinen (1), die jeweils mit wenigstens einem Speichermagazin (16) für eine Mehrzahl von Blankokarten, Einrichtungen (18) zum Laserdrucken variabler Daten auf eine Karte und Einrichtungen zum Ausstoßen einer gedruckten Karte auf einen Sammler, der allen aus der Mehrzahl von modularen Maschinen (1) gemeinsam zugeordnet ist, versehen sind, wobei das System weiter einen zentralen Computer (15) aufweist, der eine Schnittstelle mit jeder modularen Maschine (1) hat und dazu eingerichtet ist, deren Betrieb zu steuern und zu koordinieren, wobei allgemeine Einrichtungen zentralisierter Dienst für jede modulare Maschine (1) vorgesehen sind und wobei eine Mehrzahl von Grundplatten (12) vorgesehen ist, auf denen die modularen Maschinen (1) positioniert sind, wobei jede Grundplatte (12) Mittel zum Verriegeln/Entriegeln für die jeweilige modulare Maschine und Verbindungselemente (10) aufweist, die dazu eingerichtet sind, um jede Maschine (1) funktionell mit den zentralisierten Diensten zu verbinden.

2. System nach dem vorhergehenden Anspruch, wobei die Einrichtungen zentralisierter Dienste eine elektrische Energieversorgung für jede modulare Maschine (1) und/oder einen Kühlsystemservice (14) für jede modulare Maschine (1) und/oder einen Rauchabsaug-/Filtersystemservice (5) für jede modulare Maschine (1) aufweisen.

3. System nach Anspruch 2, wobei die Verbindungselemente eine Kühlplatte (3) zum funktionellen Verbinden der Maschine (1) mit dem Kühlservice (14) und/oder eine Düse (5a) zum Verbinden der Maschine (1) mit dem Rauchabsaugservice (5) und/oder einen elektrischen Verbinder (4) zum Verbinden der Maschine (1) mit dem Energieversorgungsservice mit Gleichstrom aufweisen.

4. System nach einem oder mehreren der vorhergehenden Ansprüche, wobei die Grundplatte (12) Einrichtungen (10) zur Schnittstellenherstellung einer darauf positionierten modularen Maschine (1) mit dem zentralen Computer (15) aufweist.

5. System nach einem oder mehreren der vorhergehenden Ansprüche, wobei der Sammler (16) die fertigen Karten zu einem automatisierten Brief/Umschlag-Vorbereitungssystem (R) zum Versenden der Dokumente fördert.

6. System nach einem oder mehreren der vorhergehenden Ansprüche, wobei jede der Maschinen (1) ein Aufnehmermodul (16A) zum Entnehmen einer einzelnen Karte aus dem Magazin (16) und/oder ein Kodiermodul (17) zum Lesen/Beschreiben eines Chips oder eines Magnetstreifens auf der Karte und/oder ein Wendemodul (19), das die Karte umdreht und sie zurück zu dem Lasermodul (18) leitet, und/oder ein Steuermodul (20) aufweist, das die Prüfung der gedruckten Daten und die Weiterleitung der Karte zu dem einzelnen Sammler (16) oder ihren Auswurf aus dem System ausführt.

7. System nach einem oder mehreren der vorhergehenden Ansprüche, wobei der gemeinsame Sammler (16) ein Förderband ist, das von der Steuereinheit (15) gesteuert wird.

## Revendications

1. Système modulaire permettant d'imprimer des documents d'identification comprenant une pluralité de machines modulaires (1) disposées en parallèle, chacune étant équipée d'au moins un magasin de stockage (16) pour une pluralité de cartes vierges, des moyens (18) pour l'impression laser de données variables sur une carte et des moyens pour l'éjection d'une carte imprimée sur un collecteur (16) commun à ladite pluralité de machines modulaires (1), le système comprenant en outre un ordinateur central (15) interfacé avec chaque machine modulaire (1) et adapté pour gérer et coordonner leur fonctionnement ; dans lequel des moyens généraux de services centralisés sont prévus pour chaque machine modulaire (1) ; et dans lequel une pluralité de plaques de base (12) sont prévues, sur lesquelles sont positionnées ces machines modulaires (1), chacune desdites plaques de base respectives (12) comprenant des moyens de verrouillage/déverrouillage pour lesdites machines modulaires respectives et des éléments de connexion (10) adaptés pour connecter fonctionnellement chaque machine (1) auxdits services centralisés.

2. Système selon la revendication précédente, dans lequel lesdits moyens de services centralisés comprennent un service d'alimentation électrique pour chaque machine modulaire (1) et/ou un service de système de refroidissement (14) pour chaque machine modulaire (1) et/ou un service de système d'aspiration/filtrage de vapeurs (5) pour chaque machine modulaire (1).

3. Système selon la revendication 2, dans lequel lesdits éléments de connexion comprennent une plaque de refroidissement (3) pour connecter fonctionnellement ladite machine (1) audit service de refroidissement (14) et/ou une buse (5A) pour connecter ladite machine (1) audit service d'aspiration de vapeurs (5) et/ou un connecteur électrique (4) pour connecter ladite machine (1) audit service d'alimentation électrique en courant continu.

4. Système selon une ou plusieurs des revendications précédentes, dans lequel lesdites plaques de base (12) comprennent des moyens (10) pour interfacer une machine modulaire (1) positionnée sur celle-ci avec ledit ordinateur central (15).

5. Système selon une ou plusieurs des revendications précédentes, dans lequel ledit collecteur (16) achemine les cartes finies à un système de préparation de lettres/enveloppes automatique (R) pour l'envoi des documents.

6. Système selon une ou plusieurs des revendications précédentes, dans lequel chacune desdites machines (1) comprend un module de prélèvement (16A) pour prélever une carte individuelle du magasin (16) et/ou un module de codage (17) pour lire/écrire une puce ou une bande magnétique sur la carte et/ou un module de retournement (19) qui retourne la carte et la ramène au module laser (18), et/ou un module de commande (20) qui fournit un contrôle des données imprimées et l'acheminement de la carte sur le collecteur unique (16) ou son expulsion hors du système.

7. Système selon une ou plusieurs des revendications précédentes, dans lequel ledit collecteur commun (16) est une bande transporteuse qui est commandée par ladite unité de commande (15).
